# EUROPEAN PATENT SPECIFICATION

(11) **EP 2 166 646 B1**
(45) Date of publication and mention of the grant of the patent: **27.06.2012**
(21) Application number: 08164662.2
(22) Date of filing: 19.09.2008
(51) Int. Cl.: H02K 5/00

(54) **Modularized motor or generator housing with cast attachment bars**
Modularisiertes Motor- oder Generatorgehäuse mit gegossenen Befestigungsstangen
Carter de moteur ou de générateur modularisé avec des barres de fixation moulées

(43) Date of publication of application: 24.03.2010
(73) Proprietor: ABB AB, 721 83 Västerås (SE)
(72) Inventor: Isberg, Peter, SE-725 92 Västerås (SE); Lindberg, Per-Olof, SE-723 41 Västerås (SE)
(74) Representative: Kock, Ina

(56) References cited:
- DE-A1- 10 318 430
- DE-U- 7 424 640
- FR-A- 2 243 099
- GB-A- 1 248 957
- US-A- 5 807 150
- US-A- 5 877 576
- US-A- 6 109 333

## Description

### Background of the invention

The invention relates to electric motor or generator housings (hereafter referred to as simply housings), especially for use in railway traction applications, and more particular to bogie attachment arrangements on the housing.

The invention also relates to a bogie attachment device and a safety nose device adapted to be fixed to a motor housing according to the invention. It also relates to a motor or generator with such housing.

Drive arrangements for use in railway vehicles comprise a traction motor mounted to the bogie frame which also is supporting the train car body. They further comprise a gearbox coupled to the motor shaft and with or without a cardan shaft coupled to the gearbox and at the other end to the wheels or wheel axle to transfer power for the propelling of the same.

In order to mount the motor on the bogie frame the typical presently known arrangements disclose motor housings with cast or welded attachment lugs.

### Closet prior art

DE7424640U discloses an electric motor housing comprising a plurality of fastening areas which can be considered to be suitable as mounting areas for attachment lugs or safety noses.

US 4,170,945 discloses a traction motor with cast attachment lugs for attaching the motor to a rail vehicle bogie frame.

US 5,675,198 discloses a stator frame comprising a connection end casting and a pinion end casting which are welded together. Both castings comprise lugs with lifting holes for mounting and safety notches to prevent the frame from falling in the event of a malfunction.

### Technical problem

Casting of motor housing, for use in railway traction motors, with frames for bogie attachments leads to production and quality problems due to casting defects in the transition areas between the attachment frames and the housing. The housings today are designed for a certain bogie frame and is not possible to fit in other bogies. Therefore the cost is high for traction motors compared to standard low and medium voltage motors. Another problem is that the housing becomes heavy with integrated cast frames for attachment to the bogie while the market request lowest possible weight of the motors.

### Description of the invention

According to one aspect of the present invention the motor housing comprises a cast housing body with cast fastening areas spaced on the envelope surface adapted to be mounting areas for attachment lugs, safety noses, air duct channels or terminal boxes.

According to a further embodiment the shape of the housing is cylindrical, square, pentagonal, hexagonal or higher or an irregular shape.

According to a further embodiment the fastening areas are shaped as axially arranged cast bars.

According to a further embodiment the fastening areas are thicker than the adjacent parts of the housing and protruding outwards.

According to a further embodiment the fastening areas are unevenly or evenly spaced circumferentially.

According to a further embodiment the fastening areas are a fastening area stretches axially along the envelope surface from one end of the housing to another forming a cast bar.

According to a further embodiment the cast bar is divided in two or more shorter bars intermittently arranged stretching axially along the envelope surface from one end of the housing to another.

According to a further embodiment there are three or more cast bars spaced circumferentially.

According to a further embodiment there are five cast bars spaced circumferentially.

According to a further embodiment there are at least two cast boxes arranged on either or each end of the housing surface.

According to a further aspect of the present invention a bogie attachment device has attachment areas formed to attach and be fixable to the attachment areas of the housing according to the invention.

According to a further embodiment of this aspect of the invention the bogie attachment device has a lug with a through hole which through hole is adapted to receive a mounting bar or rubber bushing fixed on a bogie arrangement on a railway vehicle.

According to a further aspect of the present invention a safety nose device has attachment areas formed to attach and be fixable to the attachment areas of the housing according to the invention.

The features and the advantages of the present invention are further described, by way of example only, in the following description of preferred embodiments, with references to the following drawings of embodiments of the invention, in which:
Fig. 1 shows a traction motor with a motor housing with cast bars according to the present invention on which bars are mounted attachment lugs for attaching the motor to a rail vehicle bogie frame.
Fig. 2 shows a traction motor with a motor housing with cast bars according to the present invention on which bars is mounted a safety nose for securing that the motor will be caught if the attachment to the bogie breaks.

The examples given below are for an open self ventilated motor. However, the invention is also valid for motors and generators using other cooling methods such as closed ventilated, water cooled, forced ventilated etc.

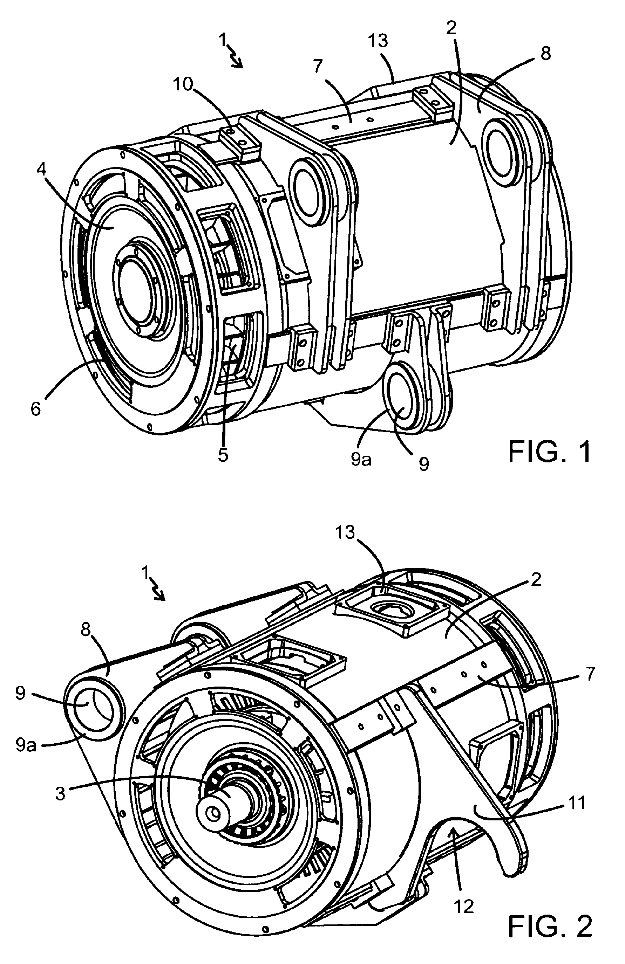

An embodiment of a motor housing 2 according to the invention is described below referring initially to Fig. 1. A traction motor 1 of self-ventilated type comprises a cylindrical motor housing 2 body which is enveloping a rotor and a stator (not shown). Other configurations of the housing than cylindrical are possible e.g. square, pentagonal, hexagonal or higher shapes. The rotor is arranged concentrically on an out-going rotor shaft 3 to which a coupling connected to a gear box (not shown) may be attached, ultimately driving the driving wheels of the vehicle. The rotor shaft 3 is extending to an end motor shield 4. The end motor shield 4 also comprises ventilating through holes 6. In the embodiment disclosed in the figures, namely a self ventilated motor the through holes 6 are blinded by cover plates. However in a forced ventilated motor these cover plates may be left out or used to cover some of these through holes. The motor housing 2 is preferably cast but can also be welded with fastening areas thicker than the rest of the housing. The fastening areas which are formed as cast bars 7 and stretch longitudinally along the envelope surface from one end of the cylindrical motor housing 2 to the other.

The cast bars 7 are unevenly or evenly spaced around the circumference of the cylindrical motor housing 2 to provide attachment areas for bogie attachment lugs 8 of which three are disclosed in fig. 1. An uneven arrangement actively damps vibration and avoids resonance peaks in the structure. The cast bars are areas of the housing wall with a larger thickness and thus protruding outwards providing a platform in which suitable holes may be made for fastening the above-mentioned attachment lugs 8. In this meaning axial should be interpreted broadly as a non-cylindrical housing may have outer surfaces whose that are not parallel to the In the embodiment disclosed in the drawings there are 4 cast bars round the circumference but it would be possible to use more or less. An embodiment with 5 evenly spaced cast bars would mean that the overall height of the motor can be minimized leading to e.g. an as low as possible position of the car floor in relation to the wheels or the rails. A traction motor is preferably attached to the bogie in 2 to 4 different attachment positions. The location of the cast bars gives a rotational symmetric attachment to the bogie. In the present invention separate attachment lugs 8 are mounted to the cast bars 7 using screws 10. Each lug 8 is attached to two adjacently placed cast bars 7 by two screws 10 or more on each bar 7 in suitably placed screw holes. The lugs 8 are adapted to receive mounting bars or rubber bushings arranged on the railway car bogie frame and are therefore equipped with round through holes 9 in the longitudinal direction of the cylindrical housing 2 mounting the motor 1 in a direction transverse to the vehicle travel direction. The lugs 8 are provided with rubber bushings 9a mounted in the holes 9 damping the transferral of vibrations between the motor 1 and the railway car. This attachment to the cast bars can be designed so minimal shear and drag forces act on the attachment lugs and screws which enable s good shock and fatigue resistance.

As can be seen in fig. 2 the cast bars 7 may also be used for attaching a safety nose device 11 with a notch 12 in a corresponding way using screws to the housing 2 by which safety nose 11 the motor 1 is intended to be caught in case of breakdown of the motor attachment. The motor 1 through the safety nose 11 with the notch 12 may thus be caught by a catching rod mounted longitudinally under the train car body prohibiting the falling motor or motor parts from its breakdown from damaging the railway car from underneath or flying into the surroundings of the railway track and hitting eventual bystanders. Such safety arrangements will be standard on all electric train cars within the European Union. If the motor 1 should be detached during high speed travelling the motor or parts thereof may flail around and pierce the floor of the car body or cause other damage to the train and may also bounce on the ground and ultimately derail the train.

By using such housing with attachable lugs and safety nose several problems are avoided or lessened. For example the negative effects from the casting process, such as pores due to inhomogeneous cooling in the casting process, may be avoided compared to casting motor houses incorporating bogie attachments and/or safety nose. In the transition sections between the housing and the lugs the casting is often filled with voids and other unwanted phenomena weakening the casting which leads to a high cassation.

The fact that the cast bars 7 are arranged stretching longitudinally along the envelope surface of the cylindrical housing 2 makes it possible to mount the attachment lugs 8 in numerous different ways to adapt to different installation conditions. Also the position of the safety nose 11 may thus be selected to suit different installation conditions using the standardized motor housing according the present invention.

Incorporated in the housing 2 there are also at least two cast boxes 13, one to three on either or each end of the cylindrical housing surface. These cast boxes 13 may be used for mounting an air duct channel when the housing is used for a forced ventilation motor or if a directed air intake is preferred in a self-ventilated motor. The cast boxes 13 may also be used for mounting terminal boxes in a suitable position on the housing. Only the used boxes 13 need then to be machined to contain through holes to the inside of the housing 2 for either the air or the necessary wires and cables for the operation of the motor. The boxes not used remain blanks. This provides an even better flexibility making it possible to adapt the housing to several different assembly possibilities of traction motors. This also implies that the range of tools and equipment for handling the different types of mounting points for different types of motors is no longer required. A cast box with a machined through hole may be covered by a covering plate. The air intake duct and the terminal box may be attached to the cast bars as well using screws and could then be used as falling noses due to their secure attachment to the cast bars.

By using a standard diameter for the housing and varying the length of the motor for obtaining different motor power outputs the cast bars may be used to good effect by lengthen them correspondingly. The same standardized attachment lugs and also safety nose may thus be used for all motor alternatives with a certain housing diameter. The end motor shields are then also standardized and may be used on all motor alternatives. Due to the flexible attachment possibilities and adaptation of different attachment lugs or corresponding attachment devices the same motor housing is possible to use for virtually all traction motor types and installations.

The cast bars disclosed in the embodiment above are axially cast from one end to another of the housing. Other useful embodiments may comprise a divided cast bar including 2 or more shorter bars intermittently cast between the two ends. It has to be said that the attachment to the cast bars not necessarily has to be using screws, but other analogue means like bolts, welding or steering pins or a combination thereof may be used instead.

While the bogie attachment devices in this embodiment of the invention are attachment lugs other railway vehicle manufacturers may use other different types of bogie attachments. Such arrangements are naturally also possible to adapt to the motor housing according to the invention with its attachment bars, by manufacturing attachments suitable to bogies from different manufacturers adapted to be fastened to the cast bars of the housing according to the present invention.

## Claims

1. Fastening system for electric motor or generator housing, the fastening system comprising a cast housing body (2) with a plurality of cast or welded fastening areas (7) spaced on the envelope surface of the cast housing body (2), the fastening areas (7) being provided with with attachment lugs (8), safety noses (11), air duct channels or terminal boxes, wherein the fastening areas (7) stretch axially along the envelope surface of the cast housing body (2) all the way from one end of the cast housing body (2) to the other end of the same, the width of the fastening areas (7) being greater that the height of the same, the width being measured in a tangential direction of the cast housing body (2) and the height being measured in a radial direction of the same, **characterized in that** there is at least one attachment lug (8) or a safety nose (11) which is fixed to at least two different fastening areas (7).

2. Fastening system according to claim 1, wherein the shape of the cast housing body (2) is cylindrical, square, pentagonal, hexagonal or higher.

3. Fastening system according to one of the preceding claims, where the fastening areas (7) are thicker than the adjacent parts of the cast housing body (2) and protruding outwards.

4. Fastening system according to one of the preceding claims, wherein the fastening areas (7) are unevenly spaced circumferentially.

5. Fastening system according to one of the claims 1-3, where the fastening areas (7) are evenly spaced circumferentially.

6. Fastening system according to one of the preceding claims, where there are three or more fastening areas (7) spaced circumferentially.

7. Fastening system according to claim 6, where there are five fastening areas (7) spaced circumferentially.

8. Fastening system according to one of the preceding claims, where there are at least two cast boxes (13) arranged on either or each end of the cylindrical housing surface.

9. Motor or generator comprising a fastening system according to one of the claims 1-8.

## Patentansprüche

1. Befestigungssystem für ein Elektromotor- oder Generatorgehäuse, wobei das Befestigungssystem einen gegossenen Gehäusekörper (2) mit mehreren gegossenen oder geschweißten Befestigungsbereichen (7) umfasst, die auf der Mantelfläche des gegossenen Gehäusekörpers (2) beabstandet sind, wobei die Befestigungsbereiche (7) mit Befestigungsansätzen (8), Sicherheitsnasen (11), Luftleitkanälen oder Anschlusskäsen versehen sind, wobei sich die Befestigungsbereiche (7) axial entlang der Mantelfläche des gegossenen Gehäusekörpers (2) über die Strecke von einem Ende des gegossenen Gehäusekörpers (2) bis zum anderen Ende desselben erstrecken, wobei die Breite der Befestigungsbereiche (7) größer als die Höhe derselben ist, wobei die Breite in einer tangentialen Richtung des gegossenen Gehäusekörpers (2) gemessen wird und die Höhe in einer radialen Richtung desselben gemessen wird, **dadurch gekennzeichnet, dass** mindestens ein Befestigungsansatz (8) oder eine Sicherheitsnase (11) vorhanden ist, der bzw. die an mindestens zwei verschiedenen Befestigungsbereichen (7) befestigt ist.

2. Befestigungssystem nach Anspruch 1, wobei die Form des gegossenen Gehäusekörpers (2) zylindrisch, quadratisch, fünfeckig, sechseckig oder mehr als sechseckig ist.

3. Befestigungssystem nach einem der vorhergehenden Ansprüche, wobei die Befestigungsbereiche (7) dicker als die benachbarten Teile des gegossenen Gehäusekörpers (2) sind und nach außen vorstehen.

4. Befestigungssystem nach einem der vorhergehenden Ansprüche, wobei die Befestigungsbereiche (7) in Umfangsrichtung ungleichmäßig beabstandet sind.

5. Befestigungssystem nach einem der Ansprüche 1-3, wobei die Befestigungsbereiche (7) in Umfangsrichtung gleichmäßig beabstandet sind.

6. Befestigungssystem nach einem der vorhergehenden Ansprüche, wobei drei oder mehr Befestigungsbereiche (7) vorhanden sind, die in Umfangsrichtung beabstandet sind.

7. Befestigungssystem nach Anspruch 6, wobei fünf Befestigungsbereiche (7) vorhanden sind, die in Umfangsrichtung beabstandet sind.

8. Befestigungssystem nach einem der vorhergehenden Ansprüche, wobei mindestens zwei gegossene Kästen (13) vorhanden sind, die an irgendeinem oder jedem Ende der zylindrischen Gehäusefläche angeordnet sind.

9. Motor oder Generator, der ein Befestigungssystem nach einem der Ansprüche 1-8 aufweist.

## Revendications

1. Système de fixation pour un carter de moteur ou de génératrice électrique, le système de fixation comprenant un corps (2) de carter coulé ayant une pluralité de zones (7) de fixation coulées ou soudées à distance sur la surface d'enveloppe du corps (2) de carter coulé, les zones (7) de fixation étant pourvues d'oreilles (8) de fixation, de becs (11) de sécurité, de canaux de conduit d'air ou de boîtes d'extrémité, les zones (7) de fixation s'étendant axialement le long de la surface d'enveloppe du corps (2) de carter coulé tout le long d'une extrémité du corps (2) de carter coulé à l'autre extrémité de celui-ci, la largeur des zones (7) de fixation étant plus grande que leur hauteur, la largeur étant mesurée dans une direction tangentielle du corps (2) de carter coulé et la hauteur étant mesurée dans sa direction radiale, **caractérisé en ce qu'**il y a au moins une oreille (8) de fixation ou un bec (11) de sécurité qui est fixé à au moins deux zones (7) de fixation différentes.

2. Système de fixation suivant la revendication 1, dans lequel la forme du corps (2) de carter coulé est cylindrique, carrée, pentagonale, hexagonale ou polygonale supérieure.

3. Système de fixation suivant l'une des revendications précédentes, dans lequel les zones (7) de fixation sont plus épaisses que les parties voisines du corps (2) de carter coulé et font saillie vers l'extérieur.

4. Système de fixation suivant l'une des revendications précédentes, dans lequel les zones (7) de fixation sont circonférentiellement espacées d'une manière inégale.

5. Système de fixation suivant l'une des revendications 1 à 3, dans lequel les zones (7) de fixation sont circonférentiellement espacées également.

6. Système de fixation suivant l'une des revendications précédentes, dans lequel il y a trois ou plusieurs zones (7) de fixation espacées circonférentiellement.

7. Système de fixation suivant la revendication 6, dans lequel il y a cinq zones (7) de fixation espacées circonférentiellement.

8. Système de fixation suivant l'une des revendications précédentes, dans lequel il y a au moins deux boîtes (13) coulées disposées à l'une ou à chaque extrémité de la surface de carter cylindrique.

9. Moteur ou génératrice comprenant un système de fixation suivant l'une des revendications 1 à 8.
